(19) Europäisches Patentamt
European Patent Office
Office européen des brevets

(11) **EP 1 692 202 B1**

(12) **EUROPÄISCHE PATENTSCHRIFT**

(45) Veröffentlichungstag und Bekanntmachung des Hinweises auf die Patenterteilung:
**20.01.2016  Patentblatt 2016/03**

(21) Anmeldenummer: **04819624.0**

(22) Anmeldetag: **27.11.2004**

(51) Int Cl.:
*C08G 18/65* (2006.01)     *C08G 18/48* (2006.01)
*C08G 18/63* (2006.01)     *C08G 18/66* (2006.01)
*C08G 18/40* (2006.01)

(86) Internationale Anmeldenummer:
**PCT/EP2004/013472**

(87) Internationale Veröffentlichungsnummer:
**WO 2005/054326 (16.06.2005 Gazette 2005/24)**

(54) **THERMOPLASTISCHES POLYURETHAN ENTHALTEND POLYMERPOLYOLE**

THERMPLASTIC POLYURETHANE CONTAINING POLYMER POLYOLS

POLYURETHANE THERMOPLASTIQUE CONTENANT DES POLYOLS POLYMERES

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **01.12.2003  DE 10356612**

(43) Veröffentlichungstag der Anmeldung:
**23.08.2006  Patentblatt 2006/34**

(73) Patentinhaber: **BASF SE**
**67056 Ludwigshafen (DE)**

(72) Erfinder:
• **MALZ, Hauke**
**49356 Diepholz (DE)**
• **BERGER, Elke**
**01968 Senftenberg (DE)**
• **ZASCHKE, Bernd**
**01561 Schönfeld (DE)**
• **SEIBELT, Sylvia**
**49179 Ostercappeln (DE)**

(56) Entgegenhaltungen:
DE-A1- 1 770 562     DE-A1- 2 708 267
DE-A1- 19 516 149

EP 1 692 202 B1

## Beschreibung

Die Erfindung betrifft thermoplastische Polyurethane (nachfolgend als TPU bezeichnet), erhältlich durch Umsetzung von Polyisocyanaten mit Kettenverlängerungsmitteln und Polymerpolyolen, wobei zur Herstellung des Polymerpolyols ein difunktionelles Polyetherpolyol mit ausschließlich primären OH-Gruppen und einem Molekulargewicht von 500 bis 2000 als Trägerpolyol verwendet wird.

Polymerpolyole sind aus dem Stand der Technik bekannt. DE-A-27 28 284 beschreibt eine Polymerpolyolpräparat, welches äußerst stabil und filtrierbar ist und ohne Alkylmercaptan als Kettenübertragungsmittel (Moderator) hergestellt werden kann.

Weiterhin ist es aus DE-A-27 08 267 und DE-A-27 08 268 bekannt, Polyurethan-Elastomere zur Verbesserung der Trenn- und Ausformeigenschaften mit einem "bepropften" Polyol auf Basis von Poly(oxypropylen)-poly(oxyethylen)glykol herzustellen.

Thermoplastische Kunststoffe sind in der Technik weit verbreitet und finden sich in der Form von Platten, Folien, Formkörpern, Flaschen, Ummantelungen Verpackungen und dergleichen. Thermoplastische Polyurethane gehören zur Gruppe der segregierten Blockcopolymere, d.h. sie bestehen aus zwei miteinander verbundenen Polymerblöcken, oder Phasen, der sogenannten Hartphase und der Weichphase. TPU werden im allgemeinen hergestellt aus einem Isocyanat, einem Kettenverlängerungsmittel und einem bevorzugt difunktionellen Polyol. Die Mengen an Polyol und Kettenverlängerungsmittel auf der einen Seite und Isocyanat auf der anderen Seite werden üblicherweise so eingestellt, dass das Verhältnis von Isocyanatgruppen zu Hydroxygruppen annähernd 1 ist. Das Verhältnis von Isocyanatgruppe und Hydroxygruppe wird auch Kennzahl genannt. Eine Kennzahl > 1000 beschreibt hierbei einen Isocyanatüberschuss, eine Kennzahl < 1000 einen Hydroxygruppenüberschuss. Kettenverlängerungsmittel und Isocyanat bilden bei einem TPU im allgemeinen die Hartphase, Polyol und Isocyanat die Weichphase.

TPU besitzen viele chemische und mechanische Eigenschaften, die sie zum geeigneten Material für die oben genannten Anwendungen machen. So sind TPU sehr flexibel, besitzen eine hohe Reißfestigkeit, hohe Zugfestigkeit, gute Weiterreißfestigkeit, geringen Abrieb, gute Kälteflexibilität, gute Chemikalienbeständigkeit und gute Hydrolysebeständigkeit. Durch gezielten Einsatz der Ausgangskomponenten können diese Eigenschaften zudem noch für eine bestimmte gewünschte Anwendung optimiert werden, dadurch sind TPU in einem Bereich von 80 Shore A bis 74 Shore D erhältlich. Wird allerdings die Shorehärte angehoben, steigt gleichzeitig die Glastemperatur der Weichphase an. Damit nimmt aber die Kälteflexibilität ab, was in einer ganzen Reihe von Anwendungen unerwünscht ist.

Bei weichen TPU hingegen neigt das Material zum blocken, d.h. Granulate können miteinander verkleben, oder aber Folien und Kabel, die aufgewickelt sind, können nur sehr schwer wieder abgewickelt werden. Um das Verkleben zu vermindern werden heute sogenannte Mattierungskonzentrate zu einer Probe gegeben. Mattierungskonzentrate sind z.B. Mischungen von TPU mit einem weiteren Kunststoff, z.B. Polystyrol. Dies führt dann aber dazu, dass die TPU-Folie nicht mehr transparent ist, was für viele Anwendungen von Bedeutung ist. Zudem muss das Konzentrat vor der Verarbeitung mit dem TPU vermischt werden, was einen weiteren Arbeitsgang darstellt. Dies ist aber oft fertigungstechnisch nicht möglich. Häufig neigen Folien, bei denen dem TPU ein weitere Kunststoff z.B. über ein Mattierungskonzentrat beigemischt wurde zum Weißbruch. Weißbruch bedeutet, dass die Folie an einer Knickstelle eine irreversible weiße Linie aufweist. Die Vermeidung dieser sichtbaren Schädigung ist aber ein entscheidendes Qualitätskriterium.

Die Aufgabe der Erfindung bestand somit darin, ein TPU herzustellen, dass unter Erhalt der typischen TPU-Eigenschaften wie Zugfestigkeit, Reißdehnung, Abrieb und Weiterreißfestigkeit zusätzlich eine verbesserte Kälteflexibilität besitzt, nicht blockt, dabei aber möglichst transparent ist.

Die Aufgabe konnte durch ein thermoplastisches Polyurethan gelöst werden, welches durch Umsetzung von Isocyanat mit einem speziellen Polymer-Polyol erhältlich ist.

Gegenstand der Erfindung ist somit ein thermoplastisches Polyurethan, erhältlich durch Umsetzung von

   a) Isocyanaten, bevorzugt Diisocyanaten, mit
   b) Kettenverlängerungsmitteln und
   c) Polymerpolyolen, wobei zur Herstellung des Polymerpolyols ein difunktionelles Polyetherpolyol mit ausschließlich primären OH-Gruppen und einem zahlenmittleren Molekular gewicht von 500 bis 2000 als Trägerpolyol verwendet wird, und
   d) gegebenenfalls Polyolen mit einem Molekulargewicht von 400 bis 3000 g/mol und einer mittleren Funktionalität von 1,8 bis 2,3.

Thermoplastische Polyurethane sind Polyurethane, die, wenn es in dem für den Werkstoff für Verarbeitung und Anwendung typischen Temperaturbereich wiederholt erwärmt und abgekühlt wird, thermoplastisch bleiben. Unter thermoplastisch wird hierbei die Eigenschaft des Polyurethans verstanden, in einem für das Polyurethan typischen Temperaturbereich zwischen 150°C und 300°C wiederholt in der Wärme zu erweichen und beim Abkühlen zu erhärten und im erweichten Zustand wiederholt durch Fließen als Formteil, Extrudat oder Umformteil zu Halbzeug oder Gegenständen formbar zu sein.

Die erfindungsgemäßen thermoplastischen Polyurethane sind bevorzugt kontakttransparent. Kontakttransparent bedeutet in diesem Zusammenhang, dass eine Schrift der Buchstabengröße 3 (Letter Type Arial) in der Farbe Schwarz durch eine TPU-Platte von mehr als 2 mm Dicke, bevorzugt mehr als 4 mm Dicke, insbesondere bevorzugt mehr als 8 mm Dicke hindurch gut gelesen werden kann, wenn die Platte direkt auf der Schrift liegt. Man spricht hier auch von Kontakttransparenz.

Zur Herstellung der erfindungsgemäßen TPUs können als organische Isocyanate (a) allgemein bekannte aliphatische, cycloaliphatische, araliphatische und/oder aromatische Isocyanate, bevorzugt Diisocyanate eingesetzt werden. Beispiele hierfür sind Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethylcyclohexan (Isophoron-diisocyanat, IPDI), 1,4- und/oder 1,3-Bis(isocyanatomethyl)-cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat oder Gemische daraus. Bevorzugt eingesetzt werden 4,4'MDI und HDI, insbesondere 4,4'MDI.

Als Kettenverlängerungsmittel (b) können allgemein bekannte aliphatische, araliphatische, aromatische und/oder cycloaliphatische Verbindungen mit einem Molekulargewicht von 50 bis 399 g/mol, bevorzugt 60 bis 350 g/mol verwendet werden. Die Kettenverlängerungsmittel sind bevorzugt 2-funktionelle Verbindungen. Beispiele hierfür sind Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerungsmittel eingesetzt werden können. Besonders bevorzugt wird Butandiol 1,4 eingesetzt.

Bei der für die Herstellung der erfindungsgemäßen TPUs notwendigen Komponente (c) handelt es sich um Polymerpolyole, die auch häufig als Graft-Polyole bezeichnet werden. Im allgemeinen sind Polymerpolyole bekannt und kommerziell erhältlich. Polymerpolyole werden durch radikalische Polymerisation der Monomere, vorzugsweise Acrylniltril, Styrol sowie gegebenenfalls weiterer Monomerer, eines Makromers, eines Moderators unter Einsatz eines Radikal-Initiators, meist Azo-oder Peroxid-Verbindungen, in einem Polyetherol beziehungsweise Polyesterol, häufig als Trägerpolyol bezeichnet, als kontinuierliche Phase hergestellt. Beispielhaft für die Herstellung von Polymerpolyolen sind hier die Patentschriften US 4568705, US 5830944, EP 163188, EP 365986, EP 439755, EP 664306, EP 622384, EP 894812 und WO 00/59971 zu nennen.

Üblicherweise ist das eine in situ Polymerisation von Acrylnitril, Styrol oder vorzugsweise Mischungen aus Styrol und Acrylnitril, z.B. im Gewichtsverhältnis 90:10 bis 10:90 vorzugsweise 70:30 bis 30:70.

Als Trägerpolyole kommen Verbindungen mit mindestens einer Funktionalität von 2 bis 8, vorzugsweise 2 bis 6, und einem mittleren Molekulargewicht von 300 bis 8000, vorzugsweise von 300 bis 5000g/mol, zur Anwendung.

Makromere, auch als Stabilisatoren bezeichnet, sind lineare oder verzweigte Polyetherole mit Molekulargewichten ≥ 1000 g/mol, die mindestens eine endständige, reaktionsfähige olefinische ungesättigte Gruppe enthalten. Die ethylenisch ungesättigte Gruppe kann über Reaktion mit Carbonsäure-Anhydriden, wie Maleinsäureanhydrid, Fumarsäure, Acrylat- und Methacrylat-derivaten sowie Isocyanat-Derivaten, wie 3-Isopropenyl-1,1-dimethylbenzyl-Isocyanat, Isocyanato-ethylmethacrylat, an ein bereits bestehendes Polyol eingefügt werden. Ein weiterer Weg ist die Herstellung eines Polyols durch Alkoxydation von Propylenoxid und Ethylenoxid unter Vewrendung von Startmolekülen mit Hydroxylgruppen und einer ethylenischen Ungesättigtheit. Beispiele für solche Makromere sind in den Patenten US 4390645, US 5364906, EP 0461800, US 4997857, US 5358984, US 5990232, WO 01/04178 und US 6013731 beschrieben.

Während der radikalischen Polymerisation werden die Makromere mit in die Copolymerkette eingebaut. Dadurch bilden sich Blockcopolymere mit einem Polyether- und einem Poly-Acrylnitril-Styrol-Block, welche in der Grenzfläche von kontinuierlicher Phase und dispergierter Phase als Phasenvermittler wirken und das Agglomerieren der Polymerpolyolpartikel unterdrücken. Der Anteil der Makromere beträgt üblicherweise 1 bis 15 Gew.-% , bevorzugt 3 bis 10 Gew.-%, bezogen auf das Gesamtgewicht der zur Herstellung des Polymerpolyols eingesetzten Monomere.

Zur Herstellung von Polymerpolyolen werden üblicherweise Moderatoren, auch als Kettenüberträger bezeichnet, eingesetzt. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Polymerpolyole beeinflusst. Der Anteil der Moderatoren beträgt üblicherweise 0,5 bis 25 Gew.-%, bezogen auf das Gesamtgewicht der zur Herstellung des Polymerpolyols eingesetzten Monomere. Moderatoren, die üblicherweise zur Herstellung von Polymerpolyolen eingesetzt werden, sind Alkohole, wie 1-Butanol, 2-Butanol, Isopropanol, Ethanol, Methanol, Cyclohexan, Toluene, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und a-(Benzoyloxy)styren. Bevorzugt wird Alkylmercaptan verwendet.

Zur Initiierung der radikalischen Polymersisation werden üblicherweise Peroxid- oder Azo-Verbindungen, wie Dibenzoyl-peroxide, Lauroylperoxide, t-Amylperoxy-2-ethylhexanoate, Di-t-butylperoxide, Diisopropyl peroxide carbonate, t-Butyl peroxy-2-ethylhexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitrile), 2,2'-Azobisisobutyronitrile (AIBN), Dimethyl-2,2'-azobisisobutyrate, 2,2'-Azobis(2-methylbutyronitrile)-(AMBN), 1,1'-Azobis(1-cyclohexanecarbonitrile), eingesetzt. Der Anteil der Initiatoren beträgt üblicherweise 0,1 bis 6 Gew.-%, bezogen auf das Gesamtgewicht der zur Herstellung des Polymerpolyols eingesetzten Monomere.

Die radikalische Polymerisation zur Herstellung von Polymerpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Polymerpolyolen sind Temperaturen von 80 bis 140°C bei einem Druck von Atmosphärendruck bis 15 bar.

Polymerpolyole werden in kontinuierlichen Verfahren, unter Einsatz von Rührkesseln mit kontinuierlichem Zu- und Ablauf, Rührkesselkaskaden, Rohrreaktoren und Loopreaktoren mit kontinuierlichem Zu- und Ablauf, oder in diskontinuierlichen Verfahren, mittels eines Batch Reaktors oder eines Semi-Batch Reaktors, hergestellt.

Die Polymerpolyole können allein oder auch im Gemisch mit einer Komponente (d), enthaltend Polyole mit einem zahlenmittleren Molekulargewicht von 400 bis 3000 g/mol, bevorzugt 500 bis 1500 g/mol und einer mittleren Funktionalität von 1,8 bis 2,3, bevorzugt 1,9 bis 2,1, besonders bevorzugt 2,0 verwendet werden.

Es ist ein wesentliches Merkmal der vorliegenden Erfindung, dass zur Herstellung des Polymerpolyols (c) ein difunktionelles Polyetherpolyol mit ausschließlich primären OH-Gruppen und einem zahlenmittleren Molekulargewicht von 500 bis 2000 g/mol, bevorzugt 750 bis 1500 g/mol, besonders bevorzugt 800 bis 1200 g/mol, als Trägerpolyol verwendet wird.

In einer bevorzugten Ausführungsform wird zur Herstellung des Polymerpolyols (c) Polytetrahydrofuran (PTHF), üblicherweise mit einem zahlenmittleren Molekulargewicht von 500 bis 2000 g/mol, bevorzugt 750 bis 1500 g/mol, besonders bevorzugt 800 bis 1200 g/mol, insbesondere von etwa 1000 g/mol als Trägerpolyol eingesetzt.

Geeignete olefinische Monomere für die Herstellung des Feststoffanteils des Polymerpolyols sind beispielsweise Styrol, Acrylnitril, Acrylate und/oder Acrylamid. In einer bevorzugten Ausführungsform werden als olefinische Monomere Acrylnitril, Styrol, insbesondere Styrol und Acrylnitril im Verhältnis zwischen 1:1 bis 3:1 verwendet. Bevorzugt wird weiterhin zur Polymerisation ein Makromer zugegeben. Gegebenenfalls wird die Polymerisation ferner unter Einsatz eines Moderators und unter Einsatz eines Radikal-Initiators durchgeführt.

In einer bevorzugten Ausführungsform enthält der Feststoffanteil Acrylnitril, Styrol und Makromer, wobei der Anteil an Acrylnitril 10 bis 50 Gew.-% und bevorzugt 25 bis 35 Gew.-%, der Anteil an Styrol 30 bis 90 Gew.-%, bevorzugt 55 bis 70 Gew.-% und der Anteil an Makromer 1 bis 10 Gew.-%, bevorzugt 3 bis 6 Gew.-%, bezogen auf das Gesamtgewicht des Feststoffanteils des Polymerpolyols (c), beträgt.

In einer bevorzugten Ausführungsform weist das Polymerpolyol (c) einen Feststoffanteil von 20 bis 50 Gew.-%, bevorzugt 25 bis 45, besonders bevorzugt 30 bis 40 Gew.-%, bezogen auf das Gesamtgewicht des Polymerpolyols, auf.

Bevorzugt handelt es sich bei den Polyolen (d) um Polyetherpolyole mit einer Funktionalität von 1,8-2,3, bevorzugt 1,9-2,1 insbesondere von 2. Besonders bevorzugt wird Poly-THF eingesetzt, insbesondere mit einem zahlenmittleren Molekulargewicht von etwa 1000 g/mol.

Neben den Komponenten a) bis d) können den erfindungsgemäßen thermoplastischen Polyurethanen noch die Komponenten e) bis g) zugesetzt werden. Diese Komponenten können entweder schon der Umsetzung von a) bis d) zugegeben oder erst dem resultierenden Polyurethan zugesetzt werden.

Als Komponente e) können Katalysatoren verwendet werden. Geeignete Katalysatoren beschleunigen die Reaktion zwischen den NCO-Gruppen der Isocyanate (a) und den Hydroxylgruppen der Polyolkomponenten (b), (c) und gegebenenfalls (d). Es handelt sich im allgemeinen hierbei um aus dem Stand der Technik bekannte und übliche Verbindungen, beispielsweise tertiäre Amine organischer Metallverbindungen wie Titansäureester, Eisenverbindungen wie z.B. Eisen-(III)- acetylacetonat, Zinnverbindungen, z.B. Zinndioctoat oder Zinndilaurat. Die Katalysatoren können einzeln oder in Kombination verwendet werden und werden üblicherweise in Mengen von 0,0001 bis 0,1 Gew.-Teilen pro 100 Gew.-Teile des Gesamtgewichts der Komponenten (b), (c) und gegebenenfalls (d), eingesetzt. Besonders bevorzugt ist die Verwendung von Zinndioktoat als Katalysator.

Als Komponente f) können Stabilisatoren verwendet werden. Stabilisatoren sind Stoffe, die eine Wirkstoffgruppe enthalten, welche einen Kunststoff oder eine Kunststoffmischung gegen schädliche Umwelteinflüsse schützt. Beispiele für schädliche Umwelteinflüsse sind Wärmeoxidation, Schädigung durch UV-Strahlung, Schädigung durch Ozon, nitrose Gase, saure Gase und saure Niederschläge, Luftfeuchtigkeit. Aufgrund der Bedeutung für die Qualität eines Kunststoffes sind mittlerweile sehr viele Stabilisatoren kommerziell erhältlich und eine Übersicht ist gegeben in Plastics Additive Handbook, 5th Edition, H. Zweifel, ed., Hanser Publishers, München, 2001 ([1]), S.98-S136.

Als Komponente f) werden insbesondere phenolische Antioxidantien verwendet. Beispiele für phenolische Antioxidantien sind gegeben in Plastics Additive Handbook, 5th edition, H. Zweifel, ed, Hanser Publishers, München, 2001, S.98-107 und S116-S.121.

Bevorzugt sind solche phenolische Antioxidantien, deren Molekulargewicht größer als 700 g/mol sind. Ein Beispiel für ein bevorzugt verwendetes phenolisches Antioxidans ist Pentaerythrityl-tetrakis (3-(3,5-bis(1,1-dimethylethyl)-4-hydroxyphenyl)propionate) (Irganox® - 1010). Die phenolischen Antioxidantien werden im allgemeinen in Konzentrationen von 0,1 bis 5 Gew.-% eingesetzt, bevorzugt, 0,1 - 2 Gew.-%, insbesondere 0,5 - 1,5 Gew.-%.

Wird das erfindungsgemäße TPU ultravioletter Strahlung ausgesetzt, so ist eine Stabilisierung enthaltend nur phenolische Stabilisatoren oft nicht ausreichend. Aus diesem Grund werden die erfindungsgemäßen TPUs, die UV-Licht ausgesetzt werden, bevorzugt zusätzlich mit einem UV-Absorber stabilisiert. UV-Absorber sind Moleküle, die energiereiches UV-Licht absorbieren und die Energie dissipieren. Gängige UV-Absorber, welche in der Technik Verwendung finden, gehören z.B. zur Gruppe der Zimtsäureester, der Diphenylcyanacrylate, der Formamidine, der Benzylidenemalonate, der Diarylbutadiene, Triazine sowie der Benzotriazole.. Beispiele für kommerzielle UV-Absorber finden sich in Plastics Additive Handbook, 5th edition, H. Zweifel, ed, Hanser Publishers, München, 2001, Seite 116-122.

In einer bevorzugten Ausführungsform weisen die UV-Absorber ein zahlenmittleres Molekulargewicht von größer als 300 g/mol, insbesondere größer als 390 g/mol, auf. Ferner sollten die bevorzugt verwendeten UV-Absorber eine Molekulargewicht von nicht größer als 5000 g/mol, besonders bevorzugt von nicht größer als 2000 g/mol aufweisen.

Besonders geeignet als UV-Absorber ist die Gruppe der Benzotriazole. Beispiele für besonders geeignete Benzotriazole sind Tinuvin® 213, Tinuvin® 328, Tinuvin® 571, sowie Tinuvin® 384. Üblicherweise werden die UV-Absorber in Mengen von 0,01 bis 5 Gew.-% bezogen auf die Gesamtmasse TPU zudosiert, bevorzugt 0,1 bis 2,0 Gew.-%, insbesondere 0,3 bis 0,75 Gew.-%.

Oft ist eine oben beschriebene UV-Stabilisierung basierend auf einem Antioxidant und einem UV-Absorber noch nicht ausreichend, um eine gute Stabilität des erfindungsgemäßen TPU gegen den schädlichen Einfluss von UV-Strahlen zu gewährleisten. In diesem Falle kann zu der Komponenten f) bevorzugt zusätzlich zu dem Antioxidans und dem UV-Absorber, noch ein Hindered-Amine Light Stabiizer (HALS) zu dem erfindungsgemäßen TPU zugegeben werden. Die Aktivität der HALS-Verbindungen beruht auf ihrer Fähigkeit, Nitroxylradikale zu bilden, die in den Mechanismus der Oxidation von Polymeren eingreift. HALS gelten als hocheffiziente UV-Stabilisatoren für die meisten Polymere.

HALS-Verbindungen sind allgemein bekannt und kommerziell erhältlich. Beispiele für kommerziell erhältliche HALS-Stabilisatoren finden sich in Plastics Additive Handbook, 5th edition, H. Zweifel, Hanser Publishers, München, 2001, S. 123-136.

Als Hindered Amine Light Stabilizer werden bevorzugt Hindered Amine Light Stabilizer genommen bei denen das zahlenmittlere Molekulargewicht größer als 500 g/mol sind. Ferner sollte das Molekulargewicht der bevorzugten HALS-Verbindungen nicht größer als 10000 g/mol, besonders bevorzugt nicht größer als 5000 g/mol sein.

Besonders bevorzugte Hindered Amine Light Stabilizer sind bis-(1,2,2,6,6-pentamethylpiperidyl) sebacat (Tinuvin® 765, Ciba Spezialitätenchemie AG) und , das Kondensationsprodukt aus 1-hydroxyethyl-2,2,6,6-tetramethyl-4-hydroxypiperidine and succinic acid (Tinuvin® 622). Insbesondere bevorzugt ist das Kondensationsprodukt aus 1-hydroxyethyl-2,2,6,6-tetramethyl-4-hydroxypiperidine and succinic acid (Tinuvin® 622), wenn der Titangehalt des Produktes < 150 ppm, bevorzugt < 50 ppm insbesondere bevorzugt < 10 ppm ist.

Als Komponente g) können weitere Additive verwendet werden, die dem erfindungsgemäßen TPU zugesetzt werden, um bestimmte Eigenschaften "maßzuschneidern". Hierzu gehören Verarbeitungshilfmittel; Nukleiierungsmittel, Weichmacher.

Bei der Entwicklung der Rezeptur für eine erfindungsgemäßes TPU geht man im allgemeinen wie folgt vor. Man nimmt eine fixe Menge Isocyanat a) ($X_{iso}$ in g). Dadurch ist die stöchiometrische Menge an Isocyanat ($N_{iso}$) festgelegt

$$(N_{iso} = X_{iso}/ M_{iso}) \qquad \text{[Gleichung 1]}$$

$M_{iso}$ = Molekulargewicht Isocyanat in g/ mol
$N_{iso}$ = Menge Isocyanat in Mol

Das Verhältnis von Polyolkomponenten (Polyol d)+Polymer-Polyol c)) zu Kettenverlängerer bestimmt die Härte des TPU. Zur Einstellung der Härte der TPU können der Kettenverlängerer b) und die Polyolkomponente in relativ breiten molaren Verhältnissen variiert werden. Bewährt haben sich molare Verhältnisse der Polyolkomponente zu insgesamt einzusetzenden Kettenverlängerungsmitteln (b) von 10: 1 bis 1 : 10, insbesondere von 1 : 1 bis 4 : 1, wobei die Härte der TPU mit zunehmendem Gehalt an Kettenverlängerer ansteigt. Wieviel Kettenverlängerer benötigt wird, um eine bestimmte Shore-Härte zu erreichen, ist dem Fachmann hinlänglich bekannt, kann ansonsten aber durch wenige Experimente schnell ermittelt werden. Ist die Menge an benötigtem Kettenverlängerer ($X_{KV}$ in g) ermittelt, so ergibt sich die stöchimetrische Menge an Kettenverlängerer aus:

$$N_{kv} = X_{Kv}/M_{kv} \qquad \text{[Gleichung 2]}$$

$M_{kv}$ = Molmasse Kettenverlängerer in g/mol
$N_{kv}$ = Menge Kettenverlängerer in Mol

Die stöchiometrische Menge $N_{PO}$ an Polyolkomponente folgt dann dementstprechend der Gleichung:

$$N_{PO} = N_{iso}-N_{kv} \qquad \text{[Gleichung 3]}$$

$N_{PO}$ setzt sich aus den beiden stöchiometrischen Mengen an Polymerpolyolkomponente c) ($N_{POC}$) und Polyolkomponente d) ($N_{POD}$) zusammen.

$$N_{PO} = N_{PoC}+N_{POD} \qquad \text{[Gleichung 4]}$$

Je nachdem, wie hoch jetzt der Feststoffanteil an Polymerteilchen im TPU sein soll, kann die stöchiometriche Menge von Polyolkomponente d) und Polymerpolyolkomponente c) variiert werden. Multiplikation von $N_{POC}$ und $N_{POD}$ mit den respektiven Molekulargewichten $M_{POC}$ und $M_{POD}$ ergibt dann die Menge des einzusetzenden Polyols d) bzw. Polymerpolyols c).

Da es sich bei einem Polymerpolyol de facto nicht um einen Reinstoff mit definierter Molmasse handelt, sondern um eine Gemisch zweier Polymerer, geht man zur Ermittlung der Molmasse $M_{POD}$ der Einfachheit halber so vor, dass man die OH-Zahl des Polymerpolyol c) bestimmt und dann aus der OH-Zahl ein fiktives Molekulargewicht berechnet.

$$M_{PoD}= 56100*2/\text{OH-Zahl} \qquad \text{[Gleichung 5]}$$

Die oben aufgeführten Rechnungen gelten strickt nur für TPU mit einer Kennzahl von 1000, d.h. das Verhältnis von Isocyanat zu Polyol ist 1. Soll mit einer Kennzahl ungleich 1000 gefahren werden, so wird die Menge Isocyanat $X_{iso}$ mit Kennzahl/1000 multipliziert und so eine Menge Isocyanat ($X'_{iso}$) ermittelt. Diese Menge Isocyanat wird dann für die Versuche verwendet. Üblicherweise wird bei der TPU Herstellung mit Kennzahlen zwischen 600 und 1200,bevorzugt 900-1100 gearbeitet.

Überraschenderweise hat sich gezeigt, dass bei einer Kennzahl größer 1000 die mechanischen Eigenschaften des erfindungsgemäßen TPU deutlich besser sind als bei Kennzahlen unter 1000. Daher wird besonders bevorzugt mit einer Kennzahl von 1005-1050, insbesondere 1005-1025 gearbeitet.

Gegenstand der Erfindung ist außerdem ein Verfahren zur Herstellung von thermoplastischem Polyurethan durch Umsetzung von

a) Isocyanaten, bevorzugt Diisocyanaten, mit

b) Kettenverlängerungsmitteln und

c) Polymerpolyolen, wobei zur Herstellung des Polymerpolyols ein difunktionelles Polyetherpolyol mit ausschließlich primären OH-Gruppen und einen zahlenmittleren Molekulargewicht von 500 bis 2000 als Trägerpolyol verwendet wird, und

d) gegebenenfalls ein Polyol mit einem Molekulargewicht von 400 bis 3000 g/mol und einer mittleren Funktionalität von 1,8 bis 2,3, bevorzugt 1,9 bis 2,1, insbesondere von 2.

Für bevorzugte Ausführungsformen der in dem erfindungsgemäßen Verfahren verwendeten Komponenten gelten die vorstehend gemachten Ausführungen zum erfindungsgemäßen TPU.

Die Herstellung der erfindungsgemäßen TPUs erfolgt bevorzugt kontinuierlich, beispielsweise mit Reaktionsextrudern oder dem Bandverfahren nach one-shot oder dem Prepolymerverfahren. Alternativ kann das Verfahren auch diskontinuierlich nach dem bekannten Prepolymerprozess erfolgen.

Beim Extruderverfahren werden die Aufbaukomponenten (a), (b), (c),sowie gegebenenfalls (d), (e), (f) und/oder (g) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert.

Erfolgt die Herstellung der erfindungsgemäßen TPU im Labor so geht man üblicherweise so vor, dass man die Polyolkomponente, d.h. das Polymerpolyol c) und gegebenenfalls das Polyol d) zusammen mit dem Kettenverlängerungsmittel b) in einem Weißblecheimer auf ca. 85°C erwärmt. Ist die Temperatur erreicht, so werden gegebenenfalls Katalysatoren e), Additive f) und weitere Hilfsmittel g) zudosiert und homogenisiert. Danach erfolgt die Zugabe des Isocyanats a) unter Rühren. Durch die einsetzende Polyadditionsreaktion steigt die Temperatur im Reaktionsgefäßgefäß. Bei 110°C wird der Inhalt des Weißblecheimers in eine flache Teflonschale gegossen, welche ca. 10 min bei ca. 125°C getempert wird. Abschließend wird die so hergestellte Schwarte 15 h bei 80°C gelagert. Nach Granulierung kann das so hergestellte erfindungsgemäße TPU durch übliche Verfahren weiterverarbeitet werden.

Überraschenderweise hat sich gezeigt dass das erfindungsgemäße TPU kontakttransparent ist, wenn der Koeffizient $K_b$ der Brechungsindices eines TPU's gleicher Basisrezeptur ohne Polymerteilchen und des molgewichteten Adduktes der Brechungsindices der Homopolymere des Polymerpolymers zwischen 0,99 und 1,01 liegt, bevorzugt zwischen 0,995 und 1,005.

Gegenstand der Erfindung ist ferner die Verwendung von erfindungsgemäßen kontakttransparenten TPU zur Herstellung von Folien und Fasern. Des weiteren findet es Verwendung für Automobilanwendungen im Innenraum, wie Polster und Bezugsstoffe, Armaturentafeln oder Airbags, oder für Anwendungen im Automobil-Außenbereich bei Reifen, Stoßfängern oder Schutzleisten. Ferner findet es Verwendung für Kabelummantelungen, Gehäuse, Schuhsohlen, Dispersionen, Lacke oder Farben.

Bevorzugt findet das erfindungsgemäße TPU Verwendung als Folie, z.B. als Deckfolie für Ski, als Kabelmantel, als Spritzgusskörper, z.B. als Skischuh, und/oder als Sieb.

Gegenstand der Erfindung ist somit auch ein Ski, enthaltend die erfindungsgemäßen thermoplastischen Polyurethane. Ferner ist Gegenstand der Erfindung ein Skischuh, enthaltend die erfindungsgemäßen thermoplastischen Polyurethane. Die Erfindung soll durch nachfolgende Beispiele veranschaulicht werden.

Beispiele

Herstellung des Polymerpolyols, das in den Beispielen 1 bis 9 verwendet wird:

Die Herstellung des Polymerpolyols erfolgte nach dem Semi batch - Saat - Verfahren.

a) Herstellung der Saat:

357,12 g eines Polyoxypropylenpolyoxyethylenglykols wurden als Carrierpolyol gemeinsam mit 23,81 g eines Makromers (propoxylierter Fumarsäurehalbester eines glyceringestarteten Polyoxypropylenpolyoxyethylenglykols) in einem 2-l-Autoklaven mit Rührwerk, innenliegenden Kühlschlangen und elektrischem Heizmantel gegeben und inertisiert. Anschließend erfolgte eine Druckerhöhung mit Hilfe von Stickstoff auf 1 bar Überdruck und Erwärmung auf die Synthesetemperatur von 125°C. Der restliche Teil der Reaktionsmischung, bestehend aus weiterem Carrierpolyol, Initiator V 601 (Fa. Wako Chemicals GmbH), den Monomeren Acrylnitril/Styren im Verhältnis 1 : 2 und dem Reaktionsmoderator 1-Dodecanthiol, wurde in zwei Dosierbehältern vorgelegt. Die Synthese der Polymerpolyole erfolgte durch Überführen der Rohstoffe aus den Dosierbehältern mit konstanter Dosiergeschwindigkeit über einen statischen In-Line-Mischer in den Reaktor. Die Dosierdauer für das Monomer-Moderator-Gemisch (209,98 g Acrylnitril, 420,02 g Styren, 6,62 g 1-Dodecanthiol) betrug 150 Minuten, während das Polyol-Initiator-Gemisch (379,52 g Carrierpolyol über 165 Minuten in den Reaktor dosiert wurde. Nach weiteren 10 Minuten Nachreaktionszeit bei Reaktionstemperatur wurde das Roh-Polymerpolyol über das Bodenablaufventil in einen Glaskolben überführt. Anschließend wurde das Produkt bei einer Temperatur von 135°C unter Vakuum (< 0,1 mbar) von den nicht umgesetzten Monomeren und anderen flüchtigen Verbindungen befreit. Das Endprodukt wurde abschließend mit 500 ppm Irganox® 1135 (Fa. CIBA Spezialitätenchemie Lampertsheim GmbH) stabilisiert. Die Saat hatte eine Viskosität von 5170 mPa·s bei einem Feststoffgehalt von 45,76 %

b) Herstellung des End-Polymerpolyol Diese erfolgte nach dem gleichen Procedere wie die Saatherstellung. Neben 428,59 g Polytetrahydrofuran und 18,52 g Makromer wurden 132,57 g der Saat aus a) im Reaktor vorgelegt und auf 125°C erhitzt. Ein Gemisch aus 163,32 g Acrylnitril, 326,68 g Styren und 5,15 g 1-Dodecanthiol wurde innerhalb von 150 min dosiert, parallel dazu über 165 min ein Gemisch aus 455,46 g Polytetrahydrofuran und 2,28 g Initiator V 601. Nach Entfernung der nicht umgesetzten Monomeren und flüchtigen Verbindungen sowie der Stabilisierung mit 500 ppm Irganox 1135 wurde vom fertigen Polymerpolyol eine Viskosität von 3558 mPa·s bei einem Feststoffgehalt von 35,94 % ermittelt.

Beispiel 1

Beispiel 1 beschreibt die Herstellung eines TPU im Handgussverfahren. Das Polymerpolyol der Versuchsreihe hat eine OH-Zahl von 71,8 und einen Feststoffgehalt von 37 %.

Beispiel 1.1

TPU der Shorehärte 85 A ohne Polymerteilchen

In diesem Beispiel wird die Basisrezeptur der Versuchsserie beschrieben. Versuche gehören dann zu einer Basisrezeptur wenn die Edukte gleich sind und das Verhältnis von Isocyanat (z.B. 4,4'MDI) zu Kettenverlängerer (z.B. 1,4 Butandiol) identisch ist. 921,27 g PTHF 1000 wurden in einem Weißblecheimer auf ca. 90°C erwärmt. Anschließend erfolgte unter Rühren die Zugabe von 8,08 g Irganox® 1010 und 8,08 g Irganox® 1098 sowie von 117,68 g Butandiol. Die Lösung wurde unter Rühren auf 80°C erwärmt. Anschließend wurden 572,27 g 4,4'-MDI zugegeben und gerührt, bis die Lösung homogen war. Danach wurde das TPU in eine flache Schale gegossen und zunächst 10min bei 125°C auf der Heizplatte, danach 15 h bei 110°C im Heizschrank getempert.

Beispiel 1.2

TPU der Basisrezeptur aus Beispiel 1.1 mit 5 % Polymeranteil 739,01 g PTHF 1000 sowie 216,22 g Polymerpolyol wurden in einem Weißblecheimer auf ca. 90°C erwärmt. Anschließend erfolgte unter Rühren die Zugabe von 8,08 g Irganox® 1010 und 8,08 g Irganox® 1098 sowie von 111,79 g Butandiol. Die Lösung wurde unter Rühren auf 80°C erwärmt. Anschließend wurden 543,64 g 4,4'-MDI zugegeben und gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 1.3

TPU der Basisrezeptur aus Beispiel 1.1 mit 10 % Polymeranteil 556,74 g PTHF 1000 sowie 432,43 g Polymerpolyol wurden in einem Weißblecheimer auf ca. 90 °C erwärmt. Anschließend erfolgte unter Rühren die Zugabe von 8,08 g Irganox® 1010, 8,08 g Irganox® 1098, 10 $\mu$l Zinndioctoatlösung (5%ig in Dioctyladipat) sowie von 105,91 g Butandiol. Die Lösung wurde unter Rühren auf 80°C erwärmt. Anschließend wurden 515,02 g 4,4'-MDI zugegeben und gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 1.4

TPU der Basisrezeptur aus Beispiel 1.1 mit 15 % Polymeranteil 374,48 g PTHF 1000 sowie 648,65 g Polymerpolyol wurden in einem Weißblecheimer auf ca. 90°C erwärmt. Anschließend erfolgte unter Rühren die Zugabe von 8,08 g Irganox® 1010, 8,08 g Irganox® 1098, 16 $\mu$l Zinndioctoatlösung (5%ig in Dioctyladipat) sowie von 100,02 g Butandiol. Die Lösung wurde unter Rühren auf 80°C erwärmt. Anschließend wurden 486,39 g 4,4'-MDI zugegeben und gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 1.5

TPU der Basisrezeptur aus Beispiel 1.1 mit 20 % Polymeranteil 192,22 g PTHF 1000 sowie 864,86 g Polymerpolyol wurden in einem Weißblecheimer auf ca. 90°C erwärmt. Anschließend erfolgte unter Rühren die Zugabe von 8,08 g Irganox® 1010, 8,08 g Irganox® 1098, 16 $\mu$l Zinndioctoatlösung (5%ig in Dioctyladipat) sowie von 94,13 g Butandiol. Die Lösung wurde unter Rühren auf 80°C erwärmt. Anschließend wurden 457,76 g 4,4'-MDI zugegeben und gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 1.6

TPU der Basisrezeptur aus Beispiel 1.1 mit 25 % Polymeranteil 9,95 g PTHF 1000 sowie 1081,08 g Polymerpolyol wurden in einem Weißblecheimer auf ca. 90°C erwärmt. Anschließend erfolgte unter Rühren die Zugabe von 8,08 g Irganox® 1010, 8,08 g Irganox® 1098, 16 $\mu$l Zinndioctoatlösung (5%ig in Dioctyladipat) sowie von 88,25 g Butandiol. Die Lösung wurde unter Rühren auf 80°C erwärmt. Anschließend wurden 429,13 g 4,4'-MDI zugegeben und gerührt, bis die Lösung homogen war. Danach wurde das TPU in eine flache Schale gegossen und zunächst 10 min bei 125°C auf der Heizplatte, danach 15 h bei 110°C im Heizschrank getempert.

Tabelle 1

| Basisrezeptur 1 | Beispiel 1.1 | Beispiel 1.2 | Beispiel 1.3 | Beispiel 1.4 | Beispiel 1.5 | Beispiel 1.6 |
|---|---|---|---|---|---|---|
| Dichte (g/cm$^3$) | 1,119 | 1,117 | 1,115 | 1,113 | 1,110 | 1,109 |
| Shore-Härte A | 88 | 89 | 90 | 92 | 94 | 94 |
| Shore-Härte D | 41 | 45 | 47 | 51 | 55 | 56 |
| Zugfestigkeit (Mpa) | 46 | 55 | 54 | 48 | 42 | 47 |
| Reißdehnung (%) | 420 | 480 | 460 | 440 | 410 | 450 |
| Weiterreißwiderstand (N/mm) | 45 | 58 | 50 | 58 | 66 | 76 |
| Abrieb (mm$^3$) | 35 | 33 | 38 | 41 | 48 | 47 |

Beispiel 2

Beispiel 2 beschreibt die Herstellung einer TPU- Folie

Die in Beispiel 1 beschriebenen TPU wurden in einer Mühle mit einem 8 mm Sieb gemahlen. Die Granulate wurden auf einem BRABENDER Plasti Corder mit einer Breitschlitzdüse (100 mm) bei 220°C gefahren. Es wurde eine Folienstärke von 150 μm eingestellt.

Je zwei 4 cm * 10 cm große Abschnitte der so präparierten Folien wurden übereinander gelegt und mit einem Gewicht von 1 kg bei 80°C 4 h gepresst. Dadurch kam es zu einem Anhaften der Folien. Anschließend wurden die so miteinander verbundenen Folien wieder mit einer Zugprüfmaschine (Fa. Zwick, Modell Z010) auseinandergezogen. Die dabei auftretenden Kräfte sind ein direktes Maß für die Tendenz der

Folien, zu blocken. Wie aus Tabelle 2 zu entnehmen ist, blocken die erfindungsgemäßen Folien weniger, als die entsprechende Folie ohne Polymerteilchen.

Tabelle 2

| Probe | Polymeranteil (Fertstoff) | Weiterreißfestigkeit |
|---|---|---|
| 1.1 | 0% | 4 N/cm |
| 1.3 | 10 % | 2,8 N/cm |
| 1.5 | 20 % | 2,0 N/cm |

Beispiel 3

Folien nach Beispiel 2 werden zum Quellen 1 Woche in den Weichmacher Benzoflex® XP 4030 (Velsicol, USA) getaucht. Anschließend wird die Gewichtszunahme gemessen. Die Gewichtszunahme ist ein direktes Maß dafür, wie verträglich der Weichmacher in dem TPU ist. Je größer die Aufnahme, desto verträglicher. Wie aus Tabelle 3 zu entnehmen ist, ist die Weichmacheraufnahme bei einem TPU enthaltend Polymerpolyol besser, als bei einem TPU der Basisrezeptur.

Tabelle 3

| Folie | TPU | Polymeranteil (Fertstoff) | Gewichtszunahme in % (absolut) |
|---|---|---|---|
| 2.1 | 1.1 | 0% | 58 |
| 2.3 | 1.3 | 10 % | 73 |
| 2.5 | 1.5 | 20 % | 94 |

Beispiel 4

TPU aus Beispiel 1.5 wurde analog zu Beispiel 2 zu Folien der Stärke 200 μm verarbeitet. Zur Verbesserung der UV-Stabilität wird dabei einem Ansatz 2 % eines UV-Schutzkonzentrat (Konz.2877, Elastogran GmbH) zudosiert.

Die Folien wurden nach ISO 4982-2 mit einer Schwarztafeltemperatur von 100°C 100 h belichtet. Anschließend wurde der Yellowness Index (YI) in Reflexion bestimmt. Aus Tabelle 4 wird ersichtlich, dass das erfindungsgemäße TPU mit UV-Schutzkonzentraten geschützt werden kann.

Tabelle 4

| Probe | Konz. 2877 | YI nach 100 h |
|-------|------------|---------------|
| 4.1   | -          | 63            |
| 4.2   | 10 %       | 17            |

Beispiel 5

Beispiel 5 beschreibt die Herstellung eines TPU im Handgussverfahren. Es wurde mit der Kennzahl 1020 gearbeitet. Das Polymerpolyol der Versuchsreihe hat eine OH-Zahl von 68,7 und einen Feststoffgehalt von 36,46 %.

Beispiel 5.1

TPU der Shorehärte 54 D ohne Polymerteilchen

In diesem Beispiel wird die Basisrezeptur der Versuchsserie beschrieben. Versuche gehören dann zu einer Basisrezeptur wenn die Edukte gleich sind und das Verhältnis von Isocyanat (z.B. 4,4'MDI) zu Kettenverlängerer (z.B. 1,4 Butandiol) identisch ist.

535,84 g PTHF 1000 (OHZ 113,8) und 166,31 g Butandiol wurden in einem Weißblecheimer auf ca. 85°C erwärmt. Anschließend erfolgte unter Rühren die Zugabe von 6,63 g Irganox® 1010 und 6,63 g Irganox® 1098. Anschließend wurden bei 80°C 609,81 g 4,4'-MDI zugegeben. Es wurde gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 5.2

TPU nach Basisrezeptur 5.1 mit 10% Polymeranteil

262,34 g PTHF 1000 (OHZ 113,8), 356,56 g Polymerpolyol sowie 148,23 g Butandiol wurden in einem Weißblecheimer auf ca. 90°C erwärmt. Anschließend erfolgte unter Rühren die Zugabe von 6,62 g Irganox® 1010 und 6,62 g Irganox® 1098. Anschließend wurden bei 80°C 543,52 g 4,4'-MDI zugegeben. Es wurde gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 5.3

TPU nach Basisrezeptur 5.1 mit 19% Polymeranteil

16,20 g PTHF 1000 (OHZ 113,8), 677,45 g Polymerpolyol sowie 131,96 g Butandiol wurden in einem Weißblecheimer auf ca. 90°C erwärmt. Anschließend erfolgte unter Rühren die Zugabe von 6,62 g Irganox® 1010 und 6,62 g Irganox® 1098. Anschließend wurden bei 80°C 483,87 g 4,4'-MDI zugegeben. Es wurde gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 6

Beispiel 6 beschreibt die Herstellung eines TPU im Handgussverfahren. Es wurde mit der Kennzahl 1020 gearbeitet. Das Polymerpolyol der Versuchsreihe hat eine OH-Zahl von 68,7 und einen Feststoffgehalt von 36,46 %.

Beispiel 6.1

In diesem Beispiel wird die Basisrezeptur der Versuchsserie beschrieben. Die Versuche gehören dann zu einer Basisrezeptur wenn die Edukte gleich sind und das Verhältnis von Isocyanat (z.B. 4,4'MDI) und Kettenverlängerer (z.B. 1,4 Butandiol) identisch ist.

481,20 g PTHF 1000 (OHZ 113,8) und 184,45 g Butandiol wurden in einem Weißblecheimer auf ca. 85°C erwärmt. Anschließend erfolgte unter Rühren die Zugabe von 6,63 g Irganox® 1010 und 6,63 g Irganox® 1098. Anschließend wurden bei 80°C 647,04 g 4,4'-MDI zugegeben. Es wurde gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 6.2

TPU nach Basisrezeptur 6.1 mit 7,5 % Polymeranteil

280,53 g PTHF 1000 (OHZ 113,8), 267,42 g Polymerpolyol (OHZ 68,7; Feststoffgehalt: 36,46 %) sowie 169,41 g Butandiol wurden in einem Weißblecheimer auf ca. 90°C erwärmt. Anschließend erfolgte unter Rühren die Zugabe von 6,62 g Irganox® 1010 und 6,62 g Irganox® 1098. Anschließend wurden bei 80°C 594,29 g 4,4'-MDI zugegeben. Es wurde gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 6.3

TPU nach Basisrezeptur 6.1 mit 17 % Polymeranteil

26,35 g PTHF 1000 (OHZ 113,8), 606,14 g Polymerpolyol (OHZ 68,7; Feststoffgehalt: 36,46 %) sowie 150,37 g Butandiol wurden in einem Weißblecheimer auf ca. 90°C erwärmt. Anschließend erfolgte unter Rühren die Zugabe von 6,62 g Irganox® 1010 und 6,62 g Irganox® 1098. Anschließend wurden bei 80°C 527,48 g 4,4'-MDI zugegeben. Es wurde gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 7

Beispiel 7 beschreibt Schlagzugversuche nach DIN EN ISO 179/2. Die Rohdaten wurden mit einem Tiefpass-Butteworthfilter 2. Ordnung mit Grenzfrequenz von 4 kHz gefiltert. Die Brucherkennung des Komplettbruchs erfolgte nach einem Kraftabfall auf 1 % des Maximums. Aus Tabelle 6 ist zu entnehmen, dass das erfindungsgemäße Polymerpolyol kälteflexibler ist als ein vergleichbares TPU ohne Polymerpolyolanteil.

Tabelle 6

| Beispiel | Feststoffanteil In Gew.-% | Shorehärte | Bruchtemperatur °C |
|----------|---------------------------|------------|--------------------|
| 5.1 | 0 | 62 | -25,0 |
| 5.2 | 10 | 65 | -20,0 |
| 5.3 | 19 | 68 | -18,5 |
| 6.1 | 0 | 68 | -10,0 |
| 6.2 | 7,5 | 70 | -10,0 |
| 6.3 | 17 | 72 | -10,0 |

Beispiel 8

Beispiel 8 beschreibt die Herstellung eines TPU im Handgussverfahren. Die Kennzahl wurde variiert. Das Polymerpolyol der Versuchsreihe hat eine OH-Zahl von 74,65 und einen Feststoffgehalt von 33,35 %. Der Feststoffanteil an Polymerteilchen im TPU beträgt 13 %.

Beispiel 8.1 Kennzahl 1000

24,29 g PTHF 1000 (OHZ 113,8), 584,71 g Polymerpolyol (OHZ 74,65; Feststoffgehalt: 33,35 %) sowie 208,50 g Butandiol wurden in einem Weißblecheimer auf ca. 90°C erwärmt. Anschließend erfolgte unter Rühren die Zugabe von 7,58 g Irganox® 1010 und 7,58 g Irganox® 1098. Anschließend wurden bei 80°C 682,51 g 4,4'-MDI zugegeben. Es wurde gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 8.2 Kennzahl 1010

24,29 g PTHF 1000 (OHZ 113,8), 584,71 g Polymerpolyol (OHZ 74,65; Feststoffgehalt: 33,35 %) sowie 208,50 g Butandiol wurden in einem Weißblecheimer auf ca. 90°C erwärmt. Anschließend erfolgte unter Rühren die Zugabe von 7,61 g Irganox® 1010 und 7,61 g Irganox® 1098. Anschließend wurden bei 80°C 689,33 g 4,4'-MDI zugegeben.
Es wurde gerührt, bis die Lösung homogen war. Danach wurde das TPU in eine flache Schale gegossen und zunächst 10 min bei 125°C auf der Heizplatte, danach 15 h bei 110°C im Heizschrank getempert.

Beispiel 8.3 Kennzahl 1020

24,29 g PTHF 1000 (OHZ 113,8), 584,71 g Polymerpolyol (OHZ 74,65; Feststoffgehalt: 33,35 %) sowie 208,50 g Butandiol wurden in einem Weißblecheimer auf ca. 90°C erwärmt. Anschließend erfolgte unter Rühren die Zugabe von 7,65 g Irganox® 1010 und 7,65 g Irganox® 1098. Anschließend wurden bei 80°C 696,16 g 4,4'-MDI zugegeben. Es wurde gerührt, bis die Lösung homogen war. Danach wurde das TPU in eine flache Schale gegossen und zunächst 10 min bei 125°C auf der Heizplatte, danach 15 h bei 110°C im Heizschrank getempert.
Tabelle 7 zeigt, dass der Abrieb bei einer Kennzahl >1000 kleiner ist als bei Kennzahl 1000

Tabelle 7

| Versuch | Kennzahl | Abrieb |
|---------|----------|--------|
| 8.1 | 1000 | 61 |
| 8.2 | 1010 | 55 |
| 8.3 | 1020 | 55 |

Beispiel 9

Das erfindungsgemäße TPU aus Beispiel 8.2 wurde zu einer 2 mm dicken Platte verspritzt. Die Platte ist kontakttransparent, d.h. eine Schrift der Schritgröße 3 (letter type Arial) kann durch die Platte hindurch gelesen werden. Selbst bei 4 übereinandergeschichteten Platten ist die Schrift lesbar.

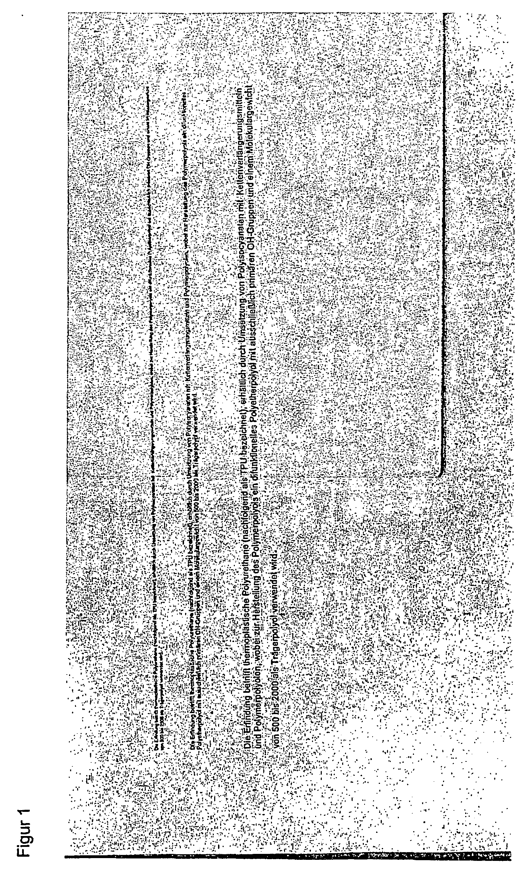

Figur 1 zeigt einen Text der Schriftgröße 3, 4, und 6 (Letter Type Arial), der durch die TPU-Platte hindurch gescannt wurde (Hewlett Packard ScanJet ADF, true color mode). Die Schrift kann durch die Platte hindurch lesbar gescannt werden.

**Patentansprüche**

1. Thermoplastisches Polyurethan, erhältlich durch Umsetzung von

   a) Isocyanaten mit
   b) Kettenverlängerungsmitteln und
   c) Polymerpolyolen, wobei zur Herstellung des Polymerpolyols ein difunktionelles Polyetherpolyol mit ausschließlich primären OH-Gruppen und einem zahlenmittleren Molekulargewicht von 500 bis 2000 als Trägerpolyol verwendet wird, und
   d) gegebenenfalls Polyolen mit einem Molekulargewicht von 400 bis 3000 g/mol und einer mittleren Funktionalität von 1,8 bis 2,3.

2. Polyurethan nach Anspruch 1, **dadurch gekennzeichnet, dass** zur Herstellung des Polymerpolyols (c) Polytetrahydrofuran als Trägerpolyol eingesetzt wird.

3. Polyurethan nach Anspruch 1 oder 2, **dadurch gekennzeichnet, dass** das Polymerpolyol (c) neben dem Trägerpolyol einen Feststoffanteil umfasst, wobei der Feststoffanteil Acrylnitril, Styrol und Makromer enthält, wobei der Anteil an Acrylnitril 10 bis 50 Gew.-%, der Anteil an Styrol 30 bis 90 Gew.-% und der Anteil an Makromer 1 bis 10 Gew.%, bezogen auf das Gesamtgewicht des Feststoffanteils des Polymerpolyols (c), beträgt.

4. Polyurethan nach einem der Ansprüche 1 bis 3, **dadurch gekennzeichnet, dass** das Polymerpolyol (c) einen Feststoffanteil von 20 bis 50 Gew.%, bezogen auf das Gesamtgewicht des Polymerpolyols, aufweist.

**5.** Polyurethan nach einem der Ansprüche 1 bis 4, **dadurch gekennzeichnet, dass** das Polymerpolyol (c) in einer Menge von 30 bis 75 Gew.%, bezogen auf das Gesamtgewicht des thermoplastischen Polyurethans, eingesetzt wird.

**6.** Polyurethan nach einem der Ansprüche 1 bis 5, **dadurch gekennzeichnet, dass** die Umsetzung bei einer Isocyanatkennzahl von 1005 bis 1025 durchgeführt wird.

**7.** Polyurethan nach einem der Ansprüche 1 bis 6, **dadurch gekennzeichnet, dass** es kontakttransparent ist.

**8.** Verfahren zur Herstellung von thermoplastischem Polyurethan durch Umsetzung von

> a) Isocyanaten mit
> b) Kettenverlängerungsmitteln und
> c) Polymerpolyolen, wobei zur Herstellung des Polymerpolyols ein difunktionelles Polyetherpolyol mit ausschließlich primären OH-Gruppen und einem Molekulargewicht von 500 bis 2000 als Trägerpolyol verwendet wird, und
> d) gegebenenfalls ein Polyol mit einem Molekulargewicht von 400 bis 3000 g/mol und einer mittleren Funktionalität von 1,8 bis 2,3.

**9.** Verwendung eines thermoplastischen Polyurethans nach einem der Ansprüche 1 bis 7 zur Herstellung von Folien, Kabelmäntel oder Spritzgusskörper.

**10.** Ski, enthaltend thermoplastische Polyurethane nach einem der Ansprüche 1 bis 7.


**Claims**

**1.** A thermoplastic polyurethane, obtainable by reacting

> a) isocyanates with
> b) chain extenders and
> c) polymer polyols, said polymer polyol being prepared using a difunctional polyether polyol having exclusively primary OH groups and a number-average molecular weight of from 500 to 2000 as a carrier polyol, and
> d) optionally polyols having a molecular weight of from 400 to 3000 g/mol and an average functionality of from 1.8 to 2.3.

**2.** The polyurethane according to claim 1, wherein the polymer polyol (c) is prepared using polytetrahydrofuran as the carrier polyol.

**3.** The polyurethane according to claim 1 or 2, wherein the polymer polyol (c), in addition to the carrier polyol, comprises a solids content, said solids content comprising acrylonitrile, styrene and macromer, and the proportion of acrylonitrile being from 10 to 50% by weight, the proportion of styrene from 30 to 90% by weight and the proportion of macromer from 1 to 10% by weight, based on the total weight of the solids content of the polymer polyol (c).

**4.** The polyurethane according to any of claims 1 to 3, wherein the polymer polyol (c) has a solids content of from 20 to 50% by weight, based on the total weight of the polymer polyol.

**5.** The polyurethane according to any of claims 1 to 4, wherein the polymer polyol (c) is used in an amount of from 30 to 75% by weight, based on the total weight of the thermoplastic polyurethane.

**6.** The polyurethane according to any of claims 1 to 5, wherein the reaction is carried out at an isocyanate index of from 1005 to 1025.

**7.** The polyurethane according to any of claims 1 to 6, which is contact-transparent.

**8.** A process for producing thermoplastic polyurethane by reacting

> a) isocyanates with
> b) chain extenders and

c) polymer polyols, said polymer polyol being prepared using a difunctional polyether polyol having exclusively primary OH groups and a molecular weight of from 500 to 2000 as a carrier polyol, and
d) optionally a polyol having a molecular weight of from 400 to 3000 g/mol and an average functionality of from 1.8 to 2.3.

9. The use of a thermoplastic polyurethane according to any of claims 1 to 7 for producing films, cable sheaths or injection moldings.

10. A ski comprising thermoplastic polyurethanes according to any of claims 1 to 7.


**Revendications**

1. Polyuréthane thermoplastique pouvant être obtenu par transformation

a) d'isocyanates avec
b) des agents d'allongement de chaîne et
c) des polyols polymères, un polyétherpolyol difonctionnel présentant exclusivement des groupes OH primaires et un poids moléculaire numérique moyen de 500 à 2000 étant utilisé comme polyol support pour la préparation du polyol polymère, et
d) le cas échéant des polyols présentant un poids moléculaire de 400 à 3000 g/mole et une fonctionnalité moyenne de 1,8 à 2,3.

2. Polyuréthane selon la revendication 1, **caractérisé en ce qu'**on utilise, pour la préparation du polyol polymère (c), du polytétrahydrofuranne comme polyol support.

3. Polyuréthane selon la revendication 1 ou 2, **caractérisé en ce que** le polyol polymère (c) comprend, outre le polyol support, une proportion de solide, la proportion de solide contenant de l'acrylonitrile, du styrène et un macromère, la proportion d'acrylonitrile étant de 10 à 50% en poids, la proportion de styrène étant de 30 à 90% en poids et la proportion de macromère étant de 1 à 10% en poids, par rapport au poids total de la proportion de solide du polyol polymère (c).

4. Polyuréthane selon l'une quelconque des revendications 1 à 3, **caractérisé en ce que** le polyol polymère (c) présente une proportion de solide de 20 à 50% en poids, par rapport au poids total du polyol polymère.

5. Polyuréthane selon l'une quelconque des revendications 1 à 4, **caractérisé en ce que** le polyol polymère (c) est utilisé en une quantité de 30 à 75% en poids, par rapport au poids total du polyuréthane thermoplastique.

6. Polyuréthane selon l'une quelconque des revendications 1 à 5, **caractérisé en ce que** la transformation est réalisée jusqu'à un indice d'isocyanate de 1005 à 1025.

7. Polyuréthane selon l'une quelconque des revendications 1 à 6, **caractérisé en ce qu'**il est transparent au contact.

8. Procédé pour la préparation de polyuréthane thermoplastique par transformation

a) d'isocyanates avec
b) des agents d'allongement de chaîne et
c) des polyols polymères, un polyétherpolyol difonctionnel présentant exclusivement des groupes OH primaires et un poids moléculaire de 500 à 2000 étant utilisé comme polyol support pour la préparation du polyol polymère, et
d) le cas échéant un polyol présentant un poids moléculaire de 400 à 3000 g/mole et une fonctionnalité OH moyenne de 1,8 à 2,3.

9. Utilisation d'un polyuréthane thermoplastique selon l'une quelconque des revendications 1 à 7 pour la fabrication de feuilles, de gaines de câble ou de corps moulés par injection.

10. Ski, contenant des polyuréthanes thermoplastiques selon l'une quelconque des revendications 1 à 7.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2728284 A
- DE 2708267 A
- DE 2708268 A
- US 4568705 A
- US 5830944 A
- EP 163188 A
- EP 365986 A
- EP 439755 A
- EP 664306 A
- EP 622384 A
- EP 894812 A
- WO 0059971 A
- US 4390645 A
- US 5364906 A
- EP 0461800 A
- US 4997857 A
- US 5358984 A
- US 5990232 A
- WO 0104178 A
- US 6013731 A

**In der Beschreibung aufgeführte Nicht-Patentliteratur**

- Plastics Additive Handbook. Hanser Publishers, 2001, vol. 1, S.98-S136
- Plastics Additive Handbook. Hanser Publishers, 2001, S.98-107, S116-S.121
- Plastics Additive Handbook. Hanser Publishers, 2001, 116-122
- Plastics Additive Handbook. Hanser Publishers, 2001, 123-136